(19) Europäisches Patentamt
European Patent Office
Office européen des brevets

(11) **EP 3 232 371 A1**

(12) **EUROPEAN PATENT APPLICATION**

(43) Date of publication:
**18.10.2017 Bulletin 2017/42**

(51) Int Cl.:
**G06K 9/00** (2006.01)    **G06K 9/46** (2006.01)
**G06T 7/579** (2017.01)

(21) Application number: **17164139.2**

(22) Date of filing: **31.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **15.04.2016 CN 201610236625**

(71) Applicant: **Ricoh Company, Ltd.
Tokyo 143-8555 (JP)**

(72) Inventors:
• **WANG, Qian
Beijing, Beijing 100044 (CN)**

• **WANG, Gang
Beijing, Beijing 100044 (CN)**
• **ZHU, Jiadan
Beijing, Beijing 100044 (CN)**
• **PANG, Bo
Beijing, Beijing 100044 (CN)**

(74) Representative: **Watkin, Timothy Lawrence
Harvey
Marks & Clerk LLP
Fletcher House
The Oxford Science Park
Heatley Road
Oxford OX4 4GE (GB)**

(54) **OBJECT RECOGNITION METHOD, OBJECT RECOGNITION DEVICE, AND CLASSIFIER TRAINING METHOD**

(57)    Disclosed is an object recognition method comprising steps of obtaining an original image containing a region of an object waiting for recognition as well as depth information and an original optical flow image corresponding to the original image; utilizing the depth information to conduct a compensation process with respect to the original optical flow image so as to obtain a compensated optical flow image; using a convolutional neural network to extract feature components at least in the compensated optical flow image; and taking advantage of a classifier to carry out classification with respect to the feature components extracted so as to acquire a classification result for recognizing the object.

FIG.1

OBJECT RECOGNITION DEVICE — 10

OBTAINMENT PART — 200

COMPENSATION PART — 300

EXTRACTION PART — 400

RECOGNITION PART — 500

EP 3 232 371 A1

**Description**

BACKGROUND OF THE INVENTION

1. Field of the Invention

The present disclosure relates to the field of image processing, more particularly relates to an object recognition method, object recognition device, and classifier training method for recognizing an object in an image or video.

2. Description of the Related Art

Recently, in the field of computer vision, applications such as semantic image segmentation, human behavior recognition, and object tracking and localization have achieved obvious results. Particularly, the techniques for detecting and recognizing an object in an image or video are playing a very important role and have been widely utilized so far.

Conventional object recognition methods include an object detection technique using a region based convolutional neural network (RCNN). This kind of object detection technique utilizes a trained RCNN to automatically extract a feature(s) corresponding to a latent target region contained in an image, and the extracted feature(s) are used to carry out classification by a classifier. However, the drawback of this kind of object detection technique is that the size of the image input into the trained RCNN must be fixed. This may result in loss of the original aspect ratio of the image so that it is bad for object recognition. Moreover, since the moving situation of an object itself is not considered in the process of recognizing the object, the recognition result of the object may be not accurate. Furthermore, because a recognition result or training sample is acquired by conducting a marking or mining process with respect to a real-world image by using a rectangle, it is unavoidable that there exists, in the marked or mined image segment, image information not relevant to the target of interest (also called "noise information"). The existence of this kind of noise information will inevitably influence the accuracy of object recognition.

As a result, it is necessary to provide an object recognition method, object recognition device, and classifier training method for recognizing an object in an image or video which may consider the moving situation of the object itself and reduce noise information bad for object recognition, so as to improve the accuracy of object recognition.

SUMMARY OF THE INVENTION

In light of the above, the present disclosure provides an object recognition method, object recognition device, and classifier training method for recognizing an object in an image or video.

According to an embodiment of the present disclosure, an object recognition method is provided which includes a step of obtaining an original image containing a region of an object waiting for recognition as well as depth information and an original optical flow image corresponding to the original image; a step of conducting a compensation process with respect to the original optical flow image by utilizing the depth information so as to acquire a compensated optical flow image; a step of extracting feature components at least in the compensated optical flow image by using a convolutional neural network; and a step of carrying out classification with respect to the extracted feature components by a classifier so as to obtain a classification result for recognizing the object.

The compensation process is a normalization process inclusive of a sub step of conducting, for an optical flow value of each pixel in the original optical flow image, normalization with respect to the optical flow value of the corresponding pixel by utilizing the depth information of the corresponding pixel so as to acquire a normalized optical flow value of the corresponding pixel.

The object recognition method further includes a step of carrying out a binarization process with respect to the original image by using the depth information so as to obtain a binary image; and a step of conducting a filtering process with respect to the extracted feature components by utilizing the binary image so as to acquire filtered feature components.

The classifier carries out classification with respect to the filtered feature components so as to obtain the classification result for recognizing the object.

The binarization process includes a sub step of dividing the original image into plural image segments on the basis of the depth information; a sub step of selecting an image segment from the plural image segments, meeting a predetermined constraint condition; and a sub step of generating the binary image on the grounds of the selected image segment.

The object recognition method further includes a step of conducting a downsampling process with respect to the binary image on the basis of the structure of the convolutional neural network so as to obtain a downsampled binary image.

The conducting a filtering process with respect to the extracted feature components by utilizing the binary image includes a sub step of conducting the filtering process with respect to the extracted feature components by utilizing the downsampled binary image.

The downsampling process includes a sub step of dividing the binary image into a predetermined number of sub regions on the grounds of the structure of the convolutional neural network; a sub step of carrying out a voting process with respect to binary pixel values in each sub region; and a sub step of acquiring a downsampled binary pixel value in each sub region on the basis of the voting results.

The classification result includes a classification confidence, and the object recognition method further includes a step of conducting a dynamic adaptive non-maximum suppression process on the basis of the classification confidence which is acquired by the classifier with respect to each of plural regions inclusive of the object, so as to acquire a suppressed classification result serving as the classification result for recognizing the object.

Moreover, according to an embodiment of the present disclosure, a classifier training method is provided which includes a step of obtaining an original image containing a region of a known object as well as depth information and an original optical flow image corresponding to the original image; a step of conducting a compensation process with respect to the original optical flow image by using the depth information so as to acquire a compensated optical flow image; a step of extracting feature components at least in the compensated optical flow image by utilizing a convolutional neural network; and a step of training a classifier by using the extracted feature components.

Furthermore, according to an embodiment of the present disclosure, an object recognition device is provided which includes a part configured to obtain an original image containing a region of an object waiting for recognition as well as depth information and an original optical flow image corresponding to the original image; a part configured to conduct a compensation process with respect to the original optical flow image by utilizing the depth information so as to acquire a compensated optical flow image; a part configured to extract feature components at least in the compensated optical flow image by using a convolutional neural network; and a part configured to carry out classification with respect to the extracted feature components by a classifier so as to obtain a classification result for recognizing the object.

Additionally, according to an embodiment of the present disclosure, another object recognition device is provided which includes a storage configured to store an original image containing a region of an object waiting for recognition as well as depth information and an original optical flow image corresponding to the original image; and a processor connected to the storage, configured to perform a step of conducting a compensation process with respect to the original optical flow image by using the depth information so as to acquire a compensated optical flow image, a step of extracting feature components at least in the compensated optical flow image by utilizing a convolutional neural network, and a step of carrying out classification with respect to the extracted feature components by a classifier so as to obtain a classification result for recognizing the object.

As a result, since the above-described object recognition method, object recognition devices, and classifier training method utilize the depth information of the original image so as to let the moving information of the object be irrelevant to the distance between the object and the camera used and to remove the noise information bad for accurately recognizing the object, it is possible improve the accuracy of object recognition using the convolutional neural network.

BRIEF DESCRIPTION OF THE DRAWINGS

FIG. 1 is a block diagram of an object recognition device according to a first embodiment of the present disclosure;

FIG. 2 is a flowchart of an object recognition method adopted in the first embodiment of the present disclosure;

FIG. 3 illustrates objects waiting for recognition used in the first embodiment of the present disclosure;

FIG. 4 illustrates other objects waiting for recognition utilized in the first embodiment of the present disclosure;

FIG. 5 is a block diagram of an object recognition device according to a second embodiment of the present disclosure;

FIG. 6 is a flowchart of an object recognition method adopted in the second embodiment of the present disclosure;

FIG. 7 illustrates different regions in a sample used in the second embodiment of the present disclosure;

FIG. 8 is a flowchart of a binarization process in the object recognition method adopted in the second embodiment of the present disclosure;

FIG. 9 further illustrates the binarization process in the object recognition method adopted in the second embodiment of the present disclosure;

FIG. 10 is a flowchart of a downsampling process in the object recognition method adopted in the second embodiment of the present disclosure;

FIG. 11 further illustrates the downsampling process in the object recognition method adopted in the second embodiment of the present disclosure;

FIG. 12 is a block diagram of an object recognition device according to a third embodiment of the present disclosure;

FIG. 13 is a flowchart of an object recognition method adopted in the third embodiment of the present disclosure;

FIG. 14 illustrates a non-maximum suppression process in the object recognition method adopted in the third embodiment of the present disclosure;

FIG. 15 is a flowchart of a classifier training method according to a fourth embodiment of the present disclosure; and

FIG. 16 is a block diagram of an object recognition device according to a fifth embodiment of the present disclosure.

## DETAILED DESCRIPTION OF THE PREFERRED EMBODIMENTS

In order to let those people skilled in the art better understand the present disclosure, hereinafter, the embodiments of the present disclosure will be concretely described with reference to the drawings. However it should be noted that the same symbols, which are in the specification and the drawings, stand for the constructional elements having basically the same function and structure, and the repeated explanations for the constructional elements are omitted.

<First Embodiment>

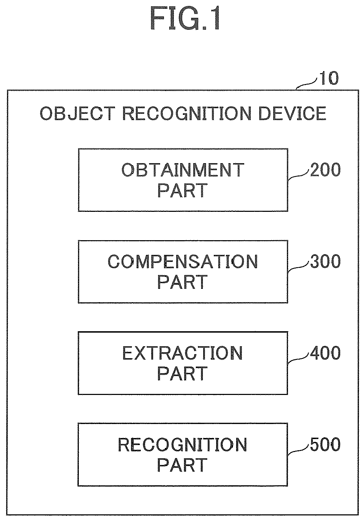

An object recognition device according to a first embodiment of the present disclosure is described by referring to FIG. 1.

FIG. 1 is a block diagram of an object recognition device 10 accord to the first embodiment.

As presented in FIG. 1, the object recognition device 10 includes an obtainment part 200, a compensation part 300, an extraction part 400, and recognition part 500. These kinds of parts may be configured by a central processing unit (CPU) in the object recognition device 10.

Alternatively, the obtainment part 200, the compensation part 300, the extraction part 400, and the recognition part 500 may be configured by a specific processing unit (e.g., an application specific integrated circuit (ASIC)) in the object recognition device 10. In other words, these kinds of parts may also be configured by hardware, software, firmware, or any combination of them.

In addition, it should be noted that what FIG. 1 shows are just the parts closely related to the object recognition device 10. That is, the object recognition device 10 may also contain other parts such as an input/output part, a display part, a communication part, and so on.

Hereinafter, the respective parts shown in FIG. 1 are described in detail.

The obtainment part 200 in FIG. 1 is configured to obtain an original image (e.g., RGB image data) including the region of an object waiting for recognition (also called a "current object") as well as depth information (e.g., a disparity map or RGBD image data containing depth information) and an optical flow image (also called an "original optical flow image") corresponding to the original image. In other words, different from a case where only an original image containing the region of an object waiting for recognition is acquired for recognition, the obtainment part 200 in the first embodiment obtains the original image including the region of the object waiting for recognition, captured by an image capture device (not shown in the drawings); the depth information corresponding to the original image; and the optical flow image generated on the grounds of the apparent motion of the brightness patterns of the original image.

In an example, the original image and its corresponding depth information may come from the image capture device. The image capture device may include an RGB camera able to obtain image data containing the region of an object waiting for recognition.

In another example, the image capture device may include a depth camera capable of acquiring depth information containing the region of an object waiting for recognition.

The image capture device may be physically separated from the obtainment part 200, or located at a same position and even in a same casing together with the obtainment part 200. In the former case, the image capture device may further send the original image and its corresponding depth information to the obtainment part 200 in a wired or wireless way. In the latter case, the image capture device may further transmit the original image and its corresponding depth information to the obtainment part 200 via an internal bus.

Here it should be noted that the object recognition device 10 may also not include the image capture device. In this case, the original image and its corresponding depth information may be received from another electrical device in a wired or wireless way, for example. In addition, hereinafter the image capture device is called a "camera" for short.

The compensation part 300 in FIG. 1 is configured to carry out a compensation process with respect to the original optical flow image by utilizing the depth information so as to acquire a compensated optical flow image.

Optical flow or optic flow is the pattern of apparent motion of objects, surfaces, and edges in a visual scene caused by the relative motion between an observer and a scene. Here it should be noted that since the optical flow is well known in the art, its details are omitted for the sake of convenience. For more information about that, it is also possible to see https://en.wikipedia.org/wiki/Optical flow.

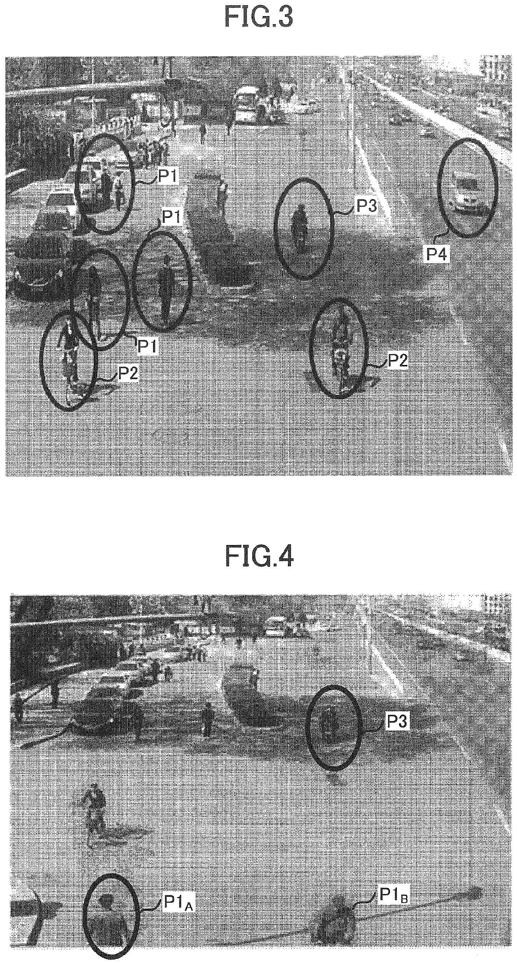

In particular, the action of target motion pattern information on objects with similar appearances is described by referring to FIG. 3, and the problem caused by using ordinary two-dimensional image based optical flow information to estimate object motion patterns is depicted by referring to FIG. 4.

FIG. 3 illustrates objects waiting for recognition used in the first embodiment.

As shown in FIG. 3, there are four types of objects waiting for recognition, namely, P1 (pedestrians), P2 (cyclists), P3 (motorcyclists), and P4 (vehicles). In general, the motion patterns and moving velocities of different types of objects are different. For example, in the case shown in this drawing, the ascending order of the moving velocities of the four types of objects is P1, P2, P3, and P4. However, the conventional optical flow estimation algorithms based on two-dimensional color or grayscale images cannot be directly applied to object motion estimation in this case due to the perspective projection transformation of camera based imaging and the principle of optical flow based motion estimation.

FIG. 4 illustrates other objects waiting for recognition utilized in the first embodiment.

As presented in FIG. 4, the amplitude of optical flow of each of the pedestrians $P1_A$ and $P1_B$ at the bottom of this drawing, close to the camera is greater than the amplitude of optical flow of the motorcyclist P3 away from the camera. In the case shown in this drawing, it is impossible to directly let the optical flow information calculated on the basis of a two-dimensional image serve as the input of a neural network for providing motion information to the neural network because the related optical flow image cannot provide motion information not relevant to distances.

As a result, the compensation process conducted by the compensation part 300 is a normalization process, i.e., utilizing the depth information to normalize the original optical flow image, and then, letting the normalized optical flow image serve as the input of a convolutional neural network so as to cause the motion information of the object waiting for recognition to be irrelevant to the distance between the object and the camera.

In particular, the compensation part 300 may use the following equation (1) to carry out the normalization process with respect to the original optical flow image (displacements are calculated by letting the unit be in pixels).

$$\rho_n = \frac{\rho_o \times d}{f_x \times f_y} \qquad (1)$$

Here, $\rho_o$ refers to the amplitude of the original optical flow; d stands for the depth value at a pixel; and $f_x$ and $f_y$ are the focal distances of the camera, respectively. According to the equation (1), it is obvious that compared to an object close to the camera, the amplitude of the optical flow of an object away from the camera is compensated much more.

Referring again to FIG. 1; the extraction part 400 is configured to extract feature components (i.e., a feature vector) at least in the compensated optical flow image by utilizing the convolutional neural network, and the recognition part 500 is configured to conduct classification with respect to the extracted feature components by employing a classifier so as to get a classification result for recognizing the object waiting for recognition.

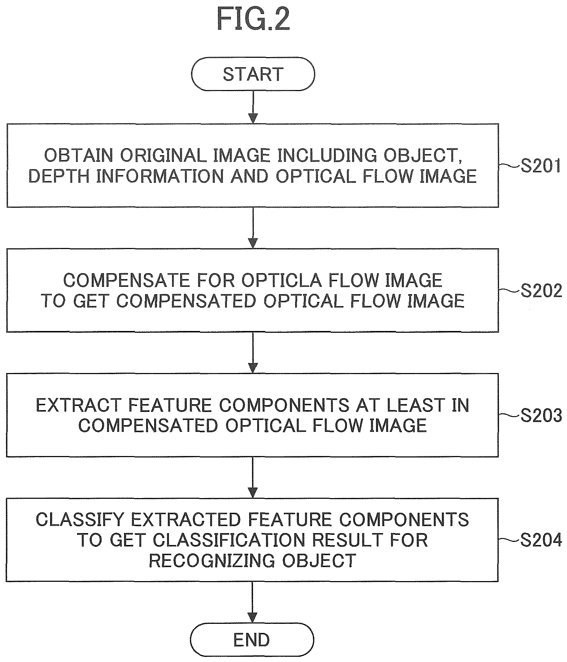

FIG. 2 is a flowchart of an object recognition method adopted in the first embodiment.

The object recognition method may be carried out by the object recognition device 10.

In STEP S201, an original image containing the region of an object waiting for recognition as well as depth information and an optical flow image corresponding to the original image are obtained. This step may be conducted by the obtainment part 200 of the object recognition device 10. And then, the process of the object recognition method goes to STEP S202.

In STEP S202, the depth information is utilized to carry out a compensation process with respect to the optical flow image so as to acquire a compensated optical flow image. This step may be conducted by the compensation part 300 of the object recognition device 10. And then, the process of the object recognition method goes to STEP S203.

In STEP S203, a convolutional neural network is used to extract feature components (i.e., a feature vector) at least in the compensated optical flow image. This step may be conducted by the extraction part 400 of the object recognition device 10. And then, the process of the object recognition method goes to STEP S204.

In STEP S204, a classifier is utilized to carry out classification with respect to the extracted feature components so as to get a classification result for recognizing the object waiting for recognition. This step may be conducted by the classification part 500 of the object recognition device 10.

Therefore, in the object recognition device and object recognition method according to the first embodiment, by utilizing the depth information to compensate for the original optical flow image so as to obtain the compensated optical flow image, and then, using the convolutional neural network to conduct feature component extraction with respect to the compensated optical flow image, it is possible to acquire motion pattern information, which is able to accurately reflect the object waiting for recognition, for carrying out object classification and recognition.

<Second Embodiment>

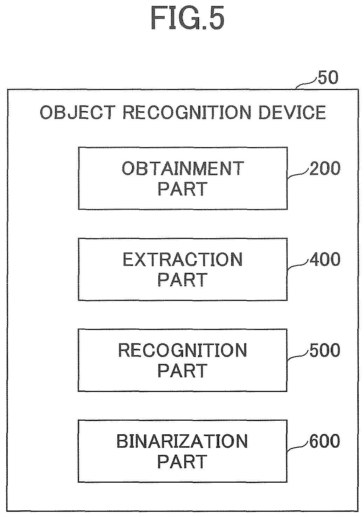

An object recognition device according to a second embodiment of the present disclosure is given by referring to FIG. 5.

FIG. 5 is a block diagram of an object recognition device 50 according to the second embodiment.

As presented in FIG. 5, the object recognition device 50 is inclusive of an obtainment part 200, an extraction part 400, a recognition part 500, and a binarization part 600. Compared to the object recognition device 10 according to the first embodiment, the object recognition device 50 according to the second embodiment does not include the compensation part 300, and further includes the binarization part 600. However, the present disclosure is not limited to this.

In particular, the obtainment part 200 in FIG. 5 is configured to obtain an original image containing the region of an object waiting for recognition as well as depth information and an optical flow image corresponding to the original image. Since its configuration and function are the same as those of the obtainment part 200 in FIG. 1, their descriptions are omitted for the sake of convenience.

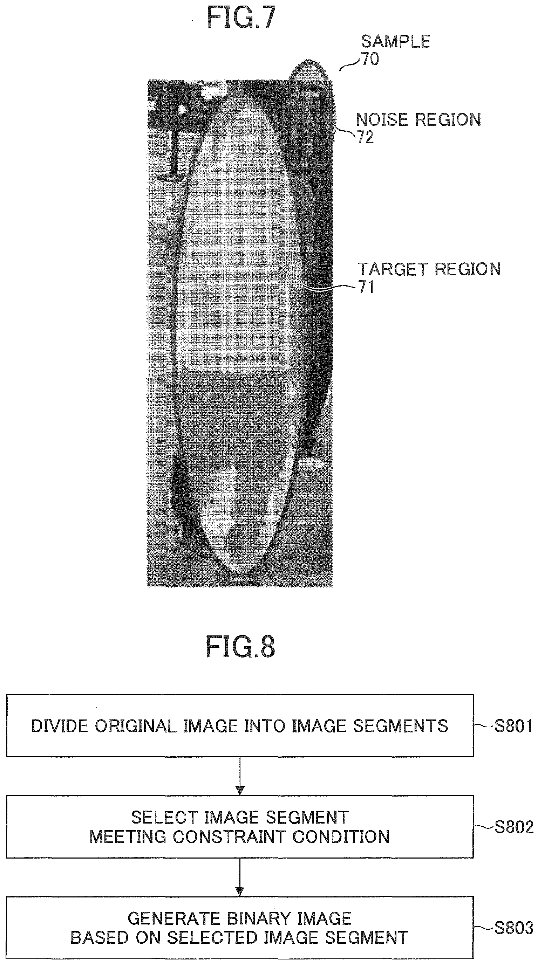

The binarization part 600 is configured to use the depth information to carry out a binarization process with respect to the original image so as to acquire a binary image. By conducting the binarization process, it is possible to remove the image information in the original image, not relevant to the current object, so that the binary image may be utilized in the follow-on Spatial Pyramid Pooling (SPP) layer based convolutional neural network. Regarding the binarization process, it will be depicted in detail by referring to FIGS. 7 to 9 below.

In addition, the extraction part 400 in FIG. 5 is configured to extract feature components (i.e., a feature vector) in the binary image by utilizing the convolutional neural network. The recognition part 500 in FIG. 5 is configured to conduct classification with respect to the extracted feature components so as to obtain a classification result for recognizing the object waiting for recognition. However, it should be noted that the extraction part 400 in FIG. 5 uses the SPP layer of the convolutional neural network to extract feature components (i.e., a feature vector) in the binary image, particularly in a downsampled binary image.

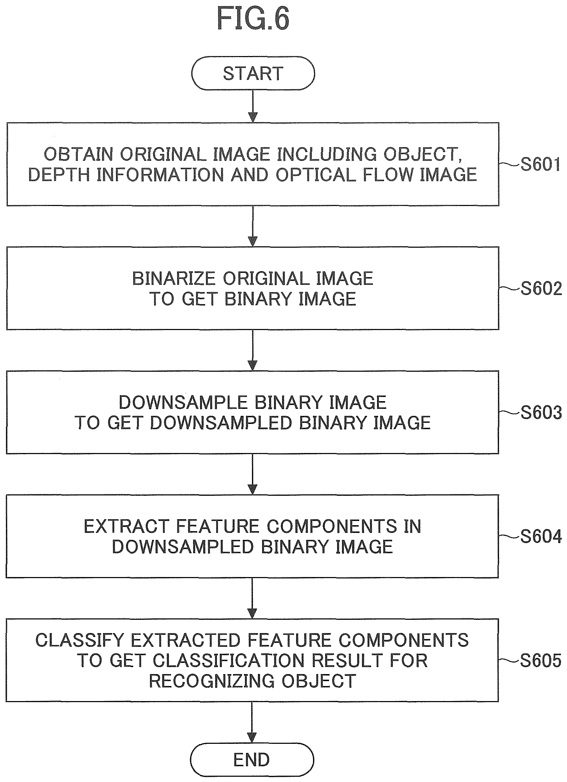

FIG. 6 is a flowchart of an object recognition method adopted in the second embodiment.

The object recognition method may be conducted by the object recognition device 50.

In STEP S601, an original image containing the region of an object waiting for recognition as well as depth information and an optical flow image are obtained. This step may be conducted by the obtainment part 200 of the object recognition device 50. And then, the process of the object recognition method goes to STEP S602.

In STEP S602, a binarization process is conducted with respect to the original image by using the depth information so as to acquire a binary image. This step may be conducted by the binarization part 600 of the object recognition device 50. And then, the process of the object recognition method goes to STEP S603.

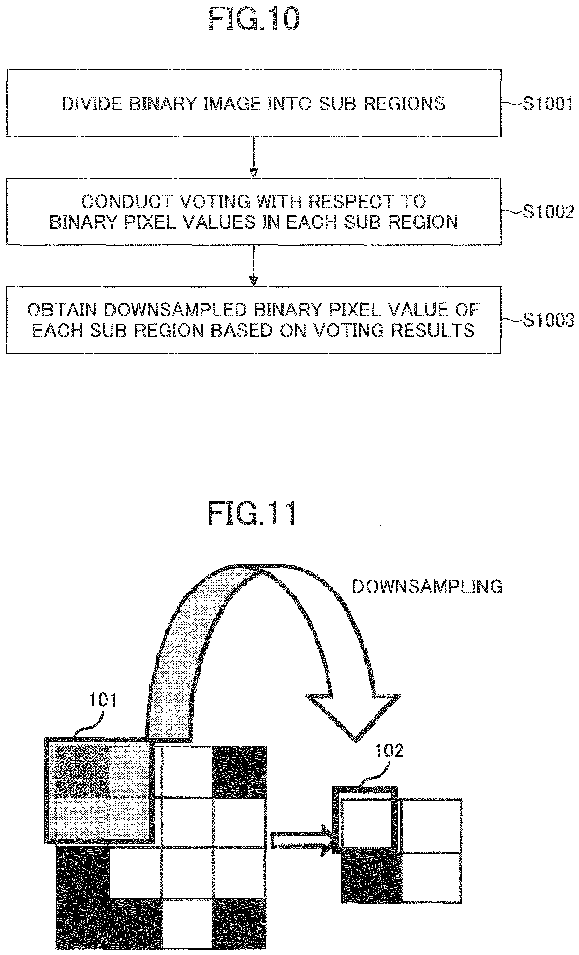

In STEP S603, on the grounds of the structure of the convolutional neural network, a downsampling process is conducted with respect to the binary image so as to get a downsampled binary image. Regarding the downsampling process, it will be concretely described by referring to FIGS. 10 and 11 below. This step may also be conducted by the binarization part 600 of the object recognition device 50, or may be conducted by an additional downsampling part (not shown in the drawings) in the object recognition device 50. And then, the process of the object recognition method goes to STEP S604.

In STEP S604, feature components (i.e., a feature vector) in the downsampled binary image are extracted by utilizing the convolutional neural network. Here it should be noted that the SPP layer of the convolutional neural network is used to extract the feature components. This step may be conducted by the extraction part 400 of the object recognition device 50. And then, the process of the object recognition method goes to STEP S605.

In STEP S605, a classifier is employed to carry out a classification process with respect to the extracted feature components so as to obtain a classification result for recognizing the object waiting for recognition. This step may be carried out by the recognition part 500 of the object recognition device 50.

FIG. 7 illustrates different regions in a sample used in the second embodiment.

As shown in FIG. 7, in an actual recognition process or training sample preparation process, a sample 70 is marked or mined by using a rectangle from a real-world image. As such, it is unavoidable that image information not relevant to the target of interest (also called "noise information") is contained in the marked or mined image segment.

For example, in FIG. 7, the sample 70 is inclusive of a target region 71 and a noise region 72. If the whole sample 70 (i.e., including the noise region 72) is input into the convolutional neural network, the feature vector extracted by using the convolutional neural network will contain the noise information related to the noise region 72. This means class independent visual information (i.e., the noise information) will be introduced in the extracted feature information. As a result, in the object recognition method adopted in the second embodiment, it is necessary to use distance information to remove the noise information bad for accurate object recognition, so as to refine the extracted feature vector.

FIG. 8 is a flowchart of the binarization process in the object recognition method adopted in the second embodiment.

In STEP S801, the original image is divided into plural image segments on the basis of the depth information. And then, the binarization process goes to STEP S802.

In STEP S802, an image segment meeting a predetermined constraint condition is selected from the plural image segments. Particularly, it is possible to choose an image segment satisfying the following equation (2), i.e., closest to the camera.

$$r_i > T \quad and \quad \mathop{argmin}\limits_{B_i} \{Mean(B_i) \mid i = 1, \cdots, n\} \qquad (2)$$

Here, T stands for a predetermined area threshold value; $r_i=area(B_i)/area(BB_i)$ in which $B_i$ refers to an i-th image segment (or cluster), $BB_i$ refers to the bounding rectangle of a training or testing sample, and area() refers to calculating the number of pixels included in an image segment or the area of a bounding rectangle; and Mean() stands for calculating the average value of depth of an image segment. In this way, it is possible to select an image segment meeting the predetermined area threshold value T, i.e., closest to the camera. And then, the binarization process goes to STEP S803.

In STEP S803, a binary image is generated on the grounds of the selected image segment.

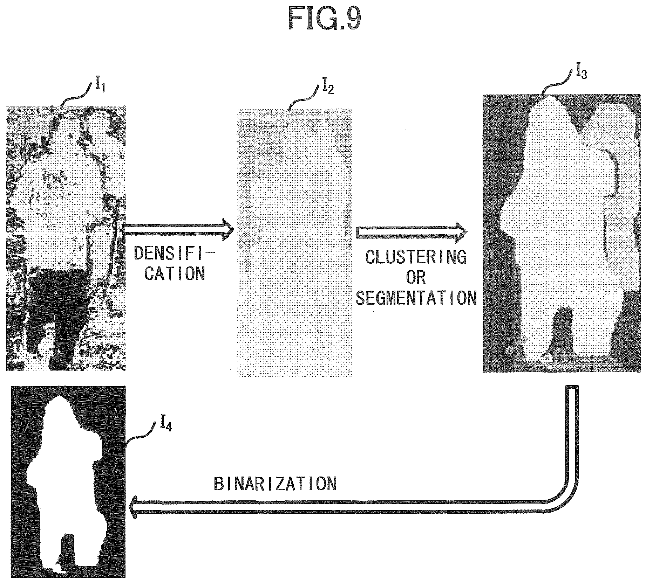

FIG. 9 further illustrates the binarization process in the object recognition method adopted in the second embodiment.

In general, regarding an invalid pixel (i.e., a pixel without a depth value, which may be expressed by black color, for instance), its depth information may be filled with a value acquired by mean filtering, mid-value filtering, belief propagation, or a rule-based connection approach.

As shown in FIG. 9, first a densification operation is conducted with respect to a sparse depth map (or a sparse disparity map) $I_1$ so as to convert it into a dense depth map $I_2$. And then, a clustering and segmentation operation is carried out with respect to the dense depth map $I_2$ by utilizing the depth information therein so as to create a depth information based binary image $I_3$. After that, on the basis of the result of the clustering and segmentation operation, it is possible to choose an image segment meeting the equation (2), and then, to generate a final binary image $I_4$ on the grounds of the selected image segment.

In addition, in order to use the final binary image to reduce the influence of the noise information in the original image on the feature components extracted by the convolutional neural network, the size of the final binary image must be the same as the size of the feature image output by the convolutional neural network. Generally speaking, the size of the feature image output by the convolutional neural network in a layer is less than the size of the original image. This is mainly due to the convolution and pooling operation in the convolutional neural network. On the other hand, the degree of feature image downsampling is mainly related to the step length used in the convolution and pooling operation. That is, the longer the step length is, the higher the degree of feature image downsampling is. As a result, it is also necessary to conduct a downsampling operation having the same degree with respect to the final binary image.

For this reason, in the object recognition method according to the second embodiment, a downsampling process needs to be accordingly carried out with respect to the binary image acquired in STEP S602 of FIG. 6 on the basis of the structure of the convolutional neural network. In particular, a voting based policy is adopted to conduct the downsampling process.

FIG. 10 is a flowchart of the downsampling process in the object recognition method according to the second embodiment.

In STEP S1001, on the basis of the structure of the convolutional neural network, the binary image is divided into a predetermined number of sub regions. And then, the downsampling process goes to STEP S1002.

In STEP S1002, a voting operation is conducted with respect to the binary pixel values in each sub region. And then, the downsampling process goes to STEP S1003.

In STEP S1003, a downsampled binary pixel value of each sub region is acquired on the grounds of the voting result related to the corresponding sub region.

Hereinafter, the downsampling process based on voting is described in detail by referring to FIG. 11.

FIG. 11 further illustrates the downsampling process in the object recognition method adopted in the second embodiment.

As shown in FIG. 11, on the left side is a 4x4 binary image, and on the right side is a binary image obtained after conducting the voting based downsampling process with respect to the binary image on the left side. In particular, on the basis of the structure of the convolutional neural network, it is possible to divide the binary image on the left side into a predetermined number of sub regions. For example, one of the divided sub regions is indicated by 101 in the binary image on the left side. And then, a voting operation is carried out with respect to each of the divided sub regions. For example, in a case of the sub region 101, it is inclusive of four pixels whose values are 0, 1, 1, and 1, respectively. As such, after conducting the voting operation, it is possible to acquire the binary pixel value of the sub region 102 in the binary image on the right side, i.e., 1. In addition, according to FIG. 11, it is obvious that the size of the binary image on the right side is one fourth of the size of the binary image on the left side.

Therefore, in the object recognition device and the object recognition method according to the second embodiment, by using the depth information corresponding to the original image (e.g., a color image) to remove the noise information bad for accurate object recognition, it is possible to utilize the binary image to remove the noise region related feature component(s) in the feature vector extracted by utilizing the convolutional neural network. In this way, it is possible to generate a refined feature vector.

<Third Embodiment>

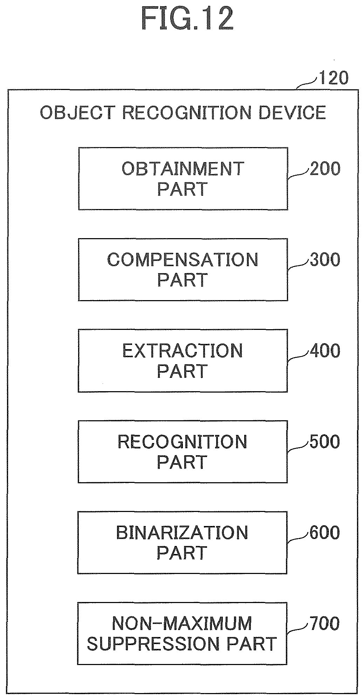

An object recognition device according to a third embodiment of the present disclosure is given by referring to FIG. 12.

FIG. 12 is a block diagram of an object recognition device 120 according to the third embodiment.

As presented in FIG. 12, the object recognition device 120 includes an obtainment part 200, a compensation part 300, an extraction part 400, a recognition part 500, a binarization part 600, and a non-maximum suppression part 700. Compared to the object recognition device 10 according to the first embodiment and the object recognition device 50 according to the second embodiment, the object recognition device 120 according to the third embodiment further contains the non-maximum suppression part 700. Here it should be noted that since the obtainment part 200, the compensation part 300, the extraction part 400, the recognition part 500, and the binarization part 600 are the same as the corresponding parts in the object recognition device 10 and the object recognition device 50, their descriptions are omitted for the sake of convenience.

In the object recognition device 120, the compensation part 300 may utilize the depth information corresponding to an original image to normalize an original optical flow image corresponding to the original image, and then, input the normalized optical flow image into a convolutional neural network, so that it is possible to let the moving information of an object waiting for recognition be irrelevant to the distance between the object and the camera. In this way, it is possible to acquire motion pattern information able to accurately reflect the object so as to carry out object classification and recognition. On the other hand, the binarization part 600 may utilize the depth information to remove the noise information bad for accurate object recognition, so that the obtained binary image may be used to remove the noise region related feature component(s) in the feature vector extracted by using the convolutional neural network so as to generate a refined feature vector.

Furthermore, the recognition part 500 may get a classification result for recognizing the object waiting for recognition on the grounds of the feature components able to accurately reflect the motion pattern information of the object and the refined feature vector. After that, the non-maximum suppression part 700 conducts a dynamic adaptive non-maximum suppression process on the basis of the classification confidence of each region so as to remove the repeated recognition results of the same object, and then, outputs the result obtained after the dynamic adaptive non-maximum suppression process is conducted as a final recognition result.

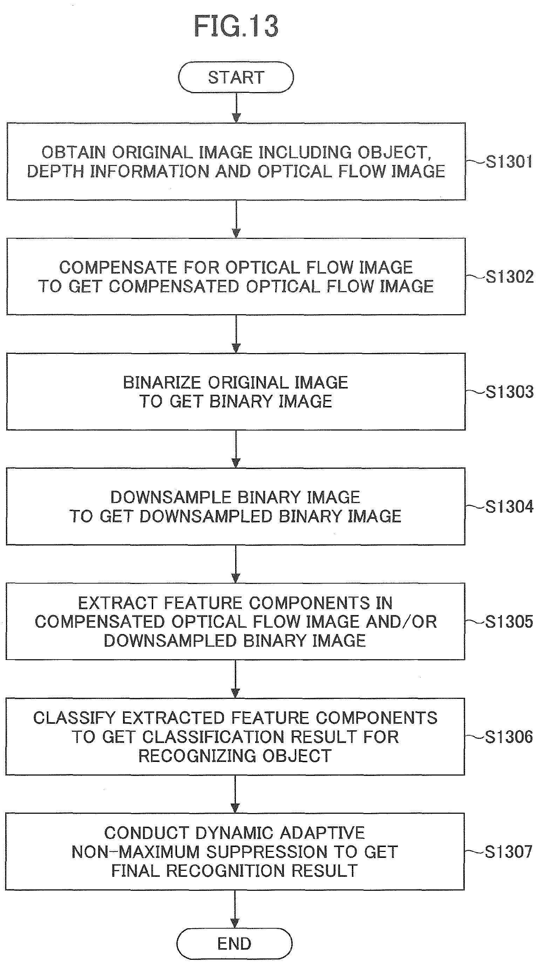

FIG. 13 is a flowchart of an object recognition method adopted in the third embodiment.

The object recognition method may be carried out by the object recognition device 120.

In STEP S1301, an original image containing the region of an object waiting for recognition as well as depth information and an original optical flow image corresponding to the original image are obtained. This step may be conducted by the obtainment part 200 of the object recognition device 120. And then, the process of the object recognition method goes to STEP S1302.

In STEP S1302, the depth information is utilized to conduct a compensation process with respect to the original optical flow image so as to acquire a compensated optical flow image. This step may be conducted by the compensation part 300 of the object recognition device 120. And then, the process of the object recognition method goes to STEP S1303.

In STEP S1303, the depth information is utilized to carry out a binarization process with respect to the original image so as to acquire a binary image. It is possible to use the binarization part 600 of the object recognition device 120 to conduct this step. And then, the process of the object recognition method goes to STEP S1304.

In STEP S1304, on the grounds of the structure of a convolutional neural network, a downsampling process is conducted with respect to the binary image so as to acquire a downsampled binary image. This step may also be carried out by the binarization part 600 of the object recognition device 120, or may be conducted by an additional downsampling part (not shown in the drawings) in the object recognition device 120. And then, the process of the object recognition method goes to STEP S1305.

In STEP S1305, feature components (i.e., a feature vector) in the compensated optical flow image and/or in the downsampled binary image are extracted by using the convolutional neural network. This step may be conducted by the extraction part 400 of the object recognition device 120. Here it should be noted that the compensated optical flow image and the downsampled binary image may be used to extract the feature components individually or in parallel. And then, the process of the object recognition method goes to STEP S1306.

In STEP S1306, a classifier is used to conduct a classification process with respect to the feature components extracted so as to acquire a classification result for recognizing the object waiting for recognition. It is possible to utilize the recognition part 500 of the object recognition device 120 to carry out this step. And then, the process of the object recognition method goes to STEP S1307.

In STEP S1307, on the basis of the classification confidence of each region, a dynamic adaptive non-maximum suppression process is carried out so as to obtain a suppressed classification result serving as a classification result for recognizing the object. That is, by conducting the dynamic adaptive non-maximum suppression process, it is possible to remove plural repeated recognition results of the object, and to output the suppressed classification result serving as a final recognition result. This step may be conducted by the non-maximum suppression part 700 of the object recognition device 120.

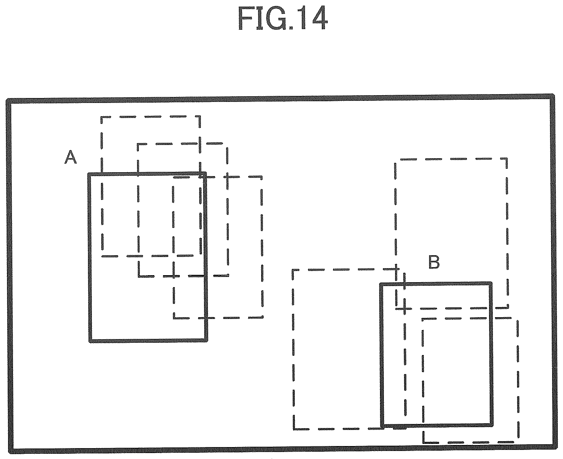

FIG. 14 illustrates the non-maximum suppression process in the object recognition method adopted in the third embodiment.

In the non-maximum suppression process, the related intersection-over-union (IoU) threshold is dynamically adjusted on the basis of the detected distribution density of a latent object. As shown in FIG. 14, the solid-line rectangles stand for suppression windows, and the dotted-line rectangles stand for suppressed windows. That is, in this local region, the recognition score of each of the solid-line rectangles is the local maxima of the recognition scores of all the surrounding windows. Moreover, both the suppression windows and the suppressed windows are location windows whose recognition scores are greater than a predetermined threshold. Regarding the suppression window A, the number of the surrounding suppressed windows is relatively big, i.e., the density is relatively high, so it is necessary to increase the IoU threshold so as to decrease the probability of missed detection. On the contrary, regarding the suppression window B, the number of the surrounding suppressed windows is relatively small, i.e., the density is relatively low, so it is necessary to decrease the IoU threshold so as to decrease the probability that plural location windows are on the same object. Furthermore, regarding each of the suppression windows A and B, the radius for estimating the surrounding suppressed windows also needs to be adjusted on the grounds of both the depth information of the corresponding suppression window and the category to which the corresponding suppression window belongs. Here it should be noted that since the non-maximum suppression process is well known in the art, its details are omitted for the sake of convenience.

Therefore, in the object recognition device and the object recognition method according to the third embodiment, by utilizing the depth information to conduct compensation with respect to the original optical flow image so as to obtain a compensated optical flow image, and then, using the convolutional neural network to carry out feature component extraction with respect to the compensated optical flow image, it is possible to acquire motion pattern information, which is able to accurately reflect the object waiting for recognition, for conducing object classification and recognition. On the other hand, by utilizing the depth information to remove the noise information which is bad for accurate object recognition, it is possible to use the obtained binary image to remove the noise region related feature component(s) in the feature vector extracted by utilizing the convolutional neural network so as to generate a refined feature vector. In addition, by carrying out the dynamic adaptive non-maximum suppression process, it is possible to remove plural repeated recognition results of the same object so as to generate a more accurate recognition result.

<Fourth Embodiment>

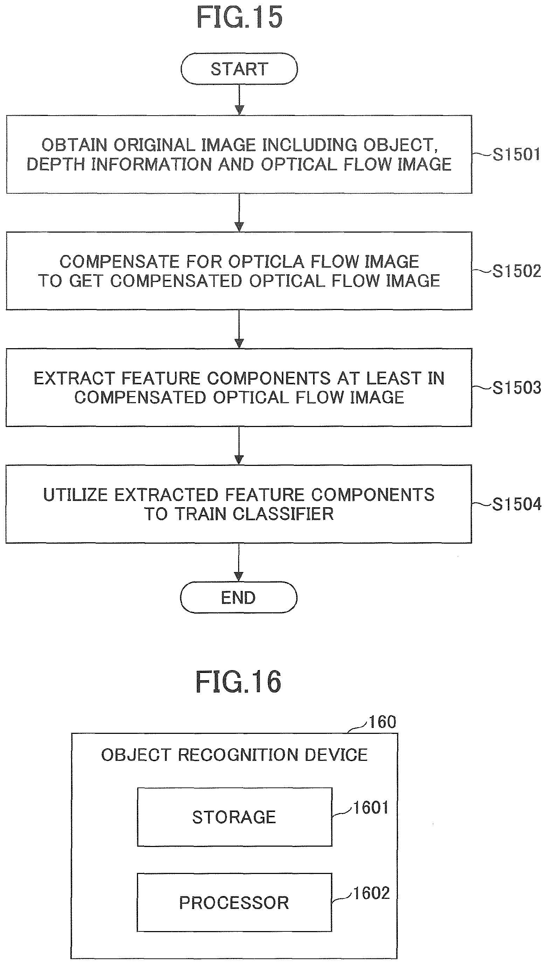

A classifier training method according to a fourth embodiment of the present disclosure is given by referring to FIG. 15.

FIG. 15 is a flowchart of the classifier training method according to the fourth embodiment.

In STEP S1501, an original image containing the region of a known object as well as depth information (e.g., a depth map) and an optical flow image corresponding to the original image are obtained. And then, the process of the classifier training method goes to STEP S1502.

In STEP S1502, the depth information is used to conduct a compensation process with respect to the optical flow image so as to acquire a compensated optical flow image. And then, the process of the classifier training method goes to STEP S1503.

In STEP S1503, a convolutional neural network is utilized to extract feature components at least in the compensated optical flow image. And then, the process of the classifier training method goes to STEP S1504.

In STEP S1504, the feature components extracted are used to train a classifier.

As described above, in the classifier training method according to the fourth embodiment, by utilizing the depth information to conduct compensation with respect to the optical flow image so as to obtain a compensated optical flow image, and then, using the convolutional neural network to carry out feature component extraction with respect to the compensated optical flow image, it is possible to cause the optical flow image for classifier training to be able to accurately reflect the motion pattern information of the object and to be irrelevant to the distance between the object and the camera.

In addition, it should be easily understood that the classifier training method according to the fourth embodiment may also utilize the depth information to remove the noise information bad for accurate object recognition so as to generate a refined feature vector for classifier training.

<Fifth Embodiment>

An object recognition device according to a fifth embodiment of the present disclosure is given by referring to FIG. 16.

FIG. 16 is a block diagram of an object recognition device 160 according to the fifth embodiment.

As shown in FIG. 16, the object recognition device 160 is inclusive of a storage 1601 and a processor 1602.

In particular, the storage 1601 is configured to store an original image containing the region of an object waiting for recognition as well as depth information and an optical flow image corresponding to the original image.

The processor 1602 is connected to the storage 1601, and is configured to utilize the depth information to conduct compensation with respect to the optical flow image so as to obtain a compensated optical flow image; use a convolutional neural network to extract feature components at least in the compensated optical flow image; and utilize a classifier to carry out classification with respect to the feature components extracted so as to acquire a classification result for recognizing the object.

In addition, the processor 1602 is further configured to use the depth information to conduct binarization with respect to the original image so as to obtain a binary image; on the basis of the structure of the convolutional neural network, carry out downsampling with respect to the binary image so as to acquire a downsampled binary image; utilize the convolutional neural network to extract feature components in the downsampled binary image; and use the classifier to conduct classification with respect to the feature components extracted so as to acquire a classification result for recognizing the object.

Therefore, by utilizing the object recognition device, the object recognition method, and the classifier training method according to the embodiments of the present disclosure, it is possible to use the depth information corresponding to an original image so as to cause the moving information of an object waiting for recognition to be irrelevant to the distance between the object and the camera, and to use the depth information to remove the noise information bad for accurate object recognition so as to improve the object recognition accuracy.

Up to here, the preferred embodiments of the present disclosure have been illustrated in detail. However, it should be noted that the above embodiments are just exemplary ones, and the specific structure and operation of them may not be used for limiting the present disclosure.

Moreover, the embodiments of the present disclosure may be implemented in any convenient form, for example, using dedicated hardware or a mixture of dedicated hardware and software. The embodiments of the present disclosure may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G-compliant phone) and so on. Since the embodiments of the present disclosure can be implemented as software, each and every aspect of the present disclosure thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present disclosure is described with reference to the specific embodiments chosen for purpose of illustration, it should be apparent that the present disclosure is not limited to these embodiments, but numerous modifications could be made thereto by those people skilled in the art without departing from the basic concept and technical scope of the present disclosure.

The present application is based on and claims the benefit of priority of Chinese Patent Application No. 201610236625.7 filed on April 15, 2016, the entire contents of which are hereby incorporated by reference.

**Claims**

1.  An object recognition method, comprising:

    a step of obtaining an original image containing a region of an object waiting for recognition as well as depth information and an original optical flow image corresponding to the original image;
    a step of utilizing the depth information to conduct a compensation process with respect to the original optical flow image so as to obtain a compensated optical flow image;
    a step of using a convolutional neural network to extract feature components at least in the compensated optical flow image; and
    a step of taking advantage of a classifier to carry out classification with respect to the feature components extracted so as to acquire a classification result for recognizing the object.

**2.** The object recognition method according to claim 1, wherein, the compensation process is a normalization process which includes

a sub step of utilizing, for each pixel in the original optical flow image, the depth information of the corresponding pixel to normalize an optical flow value of the corresponding pixel so as to get a normalized optical flow value of the corresponding pixel.

**3.** The object recognition method according to claim 1 or 2, further comprising:

a step of using the depth information to conduct a binarization process with respect to the original image so as to obtain a binary image; and

a step of utilizing the binary image to carry out a filtering process with respect to the feature components extracted so as to acquire filtered feature components,

wherein, the classifier carries out classification with respect to the filtered feature components so as to obtain the classification result for recognizing the object.

**4.** The object recognition method according to claim 3, wherein, the binarization process includes

a sub step of dividing, based on the depth information, the original image into plural image segments;

a sub step of selecting, from the plural image segments, an image segment meeting a predetermined constraint condition; and

a sub step of generating, based on the image segment selected, the binary image.

**5.** The object recognition method according to claim 3, further comprising:

a step of conducting, based on a structure of the convolutional neural network, a downsampling process with respect to the binary image so as to get a downsampled binary image,

wherein, the filtering process includes a sub step of utilizing the downsampled binary image to conduct filtering with respect to the feature components extracted.

**6.** The object recognition method according to claim 5, wherein, the downsampling process includes

a sub step of dividing, based on the structure of the convolutional neural network, the binary image into a predetermined number of sub regions;

a sub step of conducting, for each of the predetermined number of sub regions, a voting process with respect to binary pixel values in the corresponding sub region so as to obtain a voting result of the corresponding sub region; and

a sub step of acquiring, for each of the predetermined number of sub regions, a downsampled binary pixel value of the corresponding sub region based on the voting result of the corresponding sub region.

**7.** The object recognition method according to claim 1, wherein, the classification result for recognizing the object includes a classification confidence, the object recognition method further comprising:

a step of carrying out, based on the classification confidence obtained by the classifier with respect to each of plural regions including the object, a dynamic adaptive non-maximum suppression process so as to get a suppressed classification result serving as the classification result for recognizing the object.

**8.** A classifier training method, comprising:

a step of obtaining an original image containing a region of a known object as well as depth information and an original optical flow image corresponding to the original image;

a step of utilizing the depth information to conduct a compensation process with respect to the original optical flow image so as to acquire a compensated optical flow image;

a step of using a convolutional neural network to extract feature components at least in the compensated optical flow image; and

a step of taking advantage of the feature components extracted to train a classifier.

**9.** An object recognition device, comprising:

an obtainment part configured to obtain an original image containing a region of an object waiting for recognition as well as depth information and an original optical flow image corresponding to the original image;

a compensation part configured to utilize the depth information to conduct a compensation process with respect to the original optical flow image so as to obtain a compensated optical flow image;
an extraction part configured to use a convolutional neural network to extract feature components at least in the compensated optical flow image; and
a recognition part configured to take advantage of a classifier to carry out classification with respect to the feature components extracted so as to acquire a classification result for recognizing the object.

10. An object recognition device, comprising:

a storage configured to store an original image containing a region of an object waiting for recognition as well as depth information and an original optical flow image corresponding to the original image; and
a processor connected to the storage, configured to

utilize the depth information to conduct a compensation process with respect to the original optical flow image so as to obtain a compensated optical flow image;
use a convolutional neural network to extract feature components at least in the compensated optical flow image; and
take advantage of a classifier to carry out classification with respect to the feature components extracted so as to acquire a classification result for recognizing the object.

# FIG.1

```
                                    10

┌─────────────────────────────────────────┐
│  OBJECT RECOGNITION DEVICE                │
│                                           │
│   ┌─────────────────────┐                 │
│   │    OBTAINMENT       │     200         │
│   │      PART           │                 │
│   └─────────────────────┘                 │
│                                           │
│   ┌─────────────────────┐                 │
│   │   COMPENSATION      │     300         │
│   │      PART           │                 │
│   └─────────────────────┘                 │
│                                           │
│   ┌─────────────────────┐                 │
│   │    EXTRACTION       │     400         │
│   │      PART           │                 │
│   └─────────────────────┘                 │
│                                           │
│   ┌─────────────────────┐                 │
│   │   RECOGNITION       │     500         │
│   │      PART           │                 │
│   └─────────────────────┘                 │
│                                           │
└─────────────────────────────────────────┘
```

# FIG.2

START

↓

OBTAIN ORIGINAL IMAGE INCLUDING OBJECT, DEPTH INFORMATION AND OPTICAL FLOW IMAGE — S201

↓

COMPENSATE FOR OPTICLA FLOW IMAGE TO GET COMPENSATED OPTICAL FLOW IMAGE — S202

↓

EXTRACT FEATURE COMPONENTS AT LEAST IN COMPENSATED OPTICAL FLOW IMAGE — S203

↓

CLASSIFY EXTRACTED FEATURE COMPONENTS TO GET CLASSIFICATION RESULT FOR RECOGNIZING OBJECT — S204

↓

END

# FIG.3

# FIG.4

# FIG.5

50

┌─────────────────────────────────────┐
│ OBJECT RECOGNITION DEVICE            │
│                                      │
│   ┌──────────────────┐               │
│   │   OBTAINMENT     │  200          │
│   │     PART         │               │
│   └──────────────────┘               │
│                                      │
│   ┌──────────────────┐               │
│   │   EXTRACTION     │  400          │
│   │     PART         │               │
│   └──────────────────┘               │
│                                      │
│   ┌──────────────────┐               │
│   │  RECOGNITION     │  500          │
│   │     PART         │               │
│   └──────────────────┘               │
│                                      │
│   ┌──────────────────┐               │
│   │  BINARIZATION    │  600          │
│   │     PART         │               │
│   └──────────────────┘               │
│                                      │
└─────────────────────────────────────┘

# FIG.6

START

OBTAIN ORIGINAL IMAGE INCLUDING OBJECT, DEPTH INFORMATION AND OPTICAL FLOW IMAGE ~S601

BINARIZE ORIGINAL IMAGE TO GET BINARY IMAGE ~S602

DOWNSAMPLE BINARY IMAGE TO GET DOWNSAMPLED BINARY IMAGE ~S603

EXTRACT FEATURE COMPONENTS IN DOWNSAMPLED BINARY IMAGE ~S604

CLASSIFY EXTRACTED FEATURE COMPONENTS TO GET CLASSIFICATION RESULT FOR RECOGNIZING OBJECT ~S605

END

# FIG.7

SAMPLE
70

NOISE REGION
72

TARGET REGION
71

# FIG.8

| | |
|---|---|
| DIVIDE ORIGINAL IMAGE INTO IMAGE SEGMENTS | ~S801 |

↓

| | |
|---|---|
| SELECT IMAGE SEGMENT<br>MEETING CONSTRAINT CONDITION | ~S802 |

↓

| | |
|---|---|
| GENERATE BINARY IMAGE<br>BASED ON SELECTED IMAGE SEGMENT | ~S803 |

# FIG.9

I₁ → DENSIFI-CATION → I₂ → CLUSTERING OR SEGMENTATION → I₃

I₄ ← BINARIZATION ←

# FIG.10

| | |
|---|---|
| DIVIDE BINARY IMAGE INTO SUB REGIONS | ∼S1001 |

| | |
|---|---|
| CONDUCT VOTING WITH RESPECT TO BINARY PIXEL VALUES IN EACH SUB REGION | ∼S1002 |

| | |
|---|---|
| OBTAIN DOWNSAMPLED BINARY PIXEL VALUE OF EACH SUB REGION BASED ON VOTING RESULTS | ∼S1003 |

# FIG.11

DOWNSAMPLING

101

102

# FIG.12

120

```
┌─────────────────────────────────────────┐
│         OBJECT RECOGNITION DEVICE        │
│                                          │
│         ┌──────────────────┐             │
│         │    OBTAINMENT    │  ⌐200       │
│         │      PART        │             │
│         └──────────────────┘             │
│                                          │
│         ┌──────────────────┐             │
│         │   COMPENSATION   │  ⌐300       │
│         │      PART        │             │
│         └──────────────────┘             │
│                                          │
│         ┌──────────────────┐             │
│         │    EXTRACTION    │  ⌐400       │
│         │      PART        │             │
│         └──────────────────┘             │
│                                          │
│         ┌──────────────────┐             │
│         │   RECOGNITION    │  ⌐500       │
│         │      PART        │             │
│         └──────────────────┘             │
│                                          │
│         ┌──────────────────┐             │
│         │   BINARIZATION   │  ⌐600       │
│         │      PART        │             │
│         └──────────────────┘             │
│                                          │
│         ┌──────────────────┐             │
│         │   NON-MAXIMUM    │  ⌐700       │
│         │ SUPPRESSION PART │             │
│         └──────────────────┘             │
│                                          │
└─────────────────────────────────────────┘
```

# FIG.13

START

OBTAIN ORIGINAL IMAGE INCLUDING OBJECT, DEPTH INFORMATION AND OPTICAL FLOW IMAGE —S1301

COMPENSATE FOR OPTICAL FLOW IMAGE TO GET COMPENSATED OPTICAL FLOW IMAGE —S1302

BINARIZE ORIGINAL IMAGE TO GET BINARY IMAGE —S1303

DOWNSAMPLE BINARY IMAGE TO GET DOWNSAMPLED BINARY IMAGE —S1304

EXTRACT FEATURE COMPONENTS IN COMPENSATED OPTICAL FLOW IMAGE AND/OR DOWNSAMPLED BINARY IMAGE —S1305

CLASSIFY EXTRACTED FEATURE COMPONENTS TO GET CLASSIFICATION RESULT FOR RECOGNIZING OBJECT —S1306

CONDUCT DYNAMIC ADAPTIVE NON-MAXIMUM SUPPRESSION TO GET FINAL RECOGNITION RESULT —S1307

END

FIG.14

# FIG.15

START

OBTAIN ORIGINAL IMAGE INCLUDING OBJECT, DEPTH INFORMATION AND OPTICAL FLOW IMAGE ~S1501

COMPENSATE FOR OPTICLA FLOW IMAGE TO GET COMPENSATED OPTICAL FLOW IMAGE ~S1502

EXTRACT FEATURE COMPONENTS AT LEAST IN COMPENSATED OPTICAL FLOW IMAGE ~S1503

UTILIZE EXTRACTED FEATURE COMPONENTS TO TRAIN CLASSIFIER ~S1504

END

# FIG.16

/160

OBJECT RECOGNITION DEVICE

STORAGE /1601

PROCESSOR /1602

Europäisches
Patentamt

European
Patent Office

Office européen
des brevets

# EUROPEAN SEARCH REPORT

Application Number

EP 17 16 4139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CASTRO F M ET AL: "Automatic learning of gait signatures for people identification", ARXIV.ORG, CORNELL UNIVERSITY LIBRARY, 201 OLIN LIBRARY CORNELL UNIVERSITY ITHACA, NY 14853, 3 March 2016 (2016-03-03), pages 1-10, XP080686917, * Section 1. * * Sections 4, 4.1-4.3 * * Section 6. * * figures 1, 2 * | 1-10 | INV. G06K9/00 G06K9/46 G06T7/579 |
| Y | DARIO FIGUEIRA ET AL: "Optical Flow Based Detection in Mixed Human Robot Environments", 30 November 2009 (2009-11-30), ADVANCES IN VISUAL COMPUTING, SPRINGER BERLIN HEIDELBERG, BERLIN, HEIDELBERG, PAGE(S) 223 - 232, XP019134366, ISBN: 978-3-642-10330-8 * Section 1 * * Section 2.1 * * Section 5 * * figure 1 * | 1-10 | |
| Y | JIA S ET AL: "Performance improvement of human detecting and tracking based on stereo vision", ROBOTICS AND BIOMIMETICS (ROBIO), 14 December 2010 (2010-12-14), pages 1762-1767, XP031922391, IEEE,Piscataway, NJ, USA DOI: 10.1109/ROBIO.2010.5723598 ISBN: 978-1-4244-9319-7 * page 1763, column 2, last paragraph - page 1764, column 1 * * figure 3 * | 3-6 | |

TECHNICAL FIELDS SEARCHED (IPC)

G06K
G06T

-/--

The present search report has been drawn up for all claims

| Place of search | Date of completion of the search | Examiner |
|---|---|---|
| The Hague | 7 August 2017 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

Application Number

EP 17 16 4139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHANSHAN ZHANG ET AL: "Moving pedestrian detection based on motion segmentation", ROBOT VISION (WORV), 15 January 2013 (2013-01-15), pages 102-107, XP032415726, IEEE,Piscataway, NJ, USA DOI: 10.1109/WORV.2013.6521921 ISBN: 978-1-4673-5646-6 * Section 1.2. * * Sections 2. 2.1-2.3 * * figure 2 * | 1-10 | |
| A | DOMINIK HONEGGER ET AL: "Real-time velocity estimation based on optical flow and disparity matching", INTELLIGENT ROBOTS AND SYSTEMS (IROS), 2012 IEEE/RSJ INTERNATIONAL CONFERENCE ON, IEEE, 7 October 2012 (2012-10-07), pages 5177-5182, XP032287376, DOI: 10.1109/IROS.2012.6385530 ISBN: 978-1-4673-1737-5 * page 5177, column 2, paragraph 1 - paragraph 2 * * Section II.A. * | 1,2,8-10 | |
| A | US 9 165 369 B1 (ZHANG LEI [US] ET AL) 20 October 2015 (2015-10-20) * column 2, line 16 - line 38 * * column 5, line 55 - column 6, line 16 * | 1,7 | |

TECHNICAL FIELDS
SEARCHED     (IPC)

-/--

The present search report has been drawn up for all claims

| Place of search | Date of completion of the search | Examiner |
|---|---|---|
| The Hague | 7 August 2017 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 16 4139

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | R. Rothe et al.: "Non-maximum Suppression for Object Detection by Passing Messages Between Windows"<br>In:<br>16 April 2015 (2015-04-16), NETWORK AND PARALLEL COMPUTING; [LECTURE NOTES IN COMPUTER SCIENCE; LECT.NOTES COMPUTER], SPRINGER INTERNATIONAL PUBLISHING, CHAM, XP047311944,<br>ISSN: 0302-9743<br>ISBN: 978-3-540-76785-5<br>pages 290-306,<br>* Section 1 * | 1,7 | |

-----

TECHNICAL FIELDS
SEARCHED      (IPC)

The present search report has been drawn up for all claims

| Place of search | Date of completion of the search | Examiner |
|---|---|---|
| The Hague | 7 August 2017 | Moreno, Marta |

EPO FORM 1503 03.82 (P04C01)

## ANNEX TO THE EUROPEAN SEARCH REPORT
## ON EUROPEAN PATENT APPLICATION NO.

EP 17 16 4139

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2017

| Patent document cited in search report | | Publication date | Patent family member(s) | Publication date |
|---|---|---|---|---|
| US 9165369 | B1 | 20-10-2015 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201610236625